# EUROPÄISCHE PATENTSCHRIFT

(11) **EP 1 825 975 B1**
(45) Veröffentlichungstag und Bekanntmachung des Hinweises auf die Patenterteilung: **01.07.2009**
(21) Anmeldenummer: 07003384.0
(22) Anmeldetag: 17.02.2007
(51) Int. Cl.: B27G 13/04, B27G 13/10, B27L 11/00, B23C 5/22

(54) **Messerwerkzeugkopf sowie Messer und Messerhalter hierfür**
Cutter head and cutter and holding device therefor
Tête d'outil à lame tout comme couteau et support de couteau approprié

(30) Priorität: 23.02.2006 DE 102006009416
(43) Veröffentlichungstag der Anmeldung: 29.08.2007
(73) Patentinhaber: Güls, Martin, 71540 Murrhardt (DE)
(72) Erfinder: Güls, Martin, 71540 Murrhardt (DE)
(74) Vertreter: Patentanwälte Ruff, Wilhelm, Beier, Dauster & Partner

(56) Entgegenhaltungen:
- EP-A- 0 985 502
- EP-A1- 1 547 710
- DE-A1- 2 503 592
- DE-C1- 19 858 740
- DE-U1- 29 719 419

## Beschreibung

Die Erfindung betrifft einen Messerwerkzeugkopf nach dem Oberbegriff des Anspruchs 1 sowie ein Messer und einen Messerhalter, die für einen Messerwerkzeugkopf verwendbar sind.

Messerwerkzeugköpfe, welche mit einem oder mehreren geeigneten Messern bestückbar sind, finden beispielsweise Anwendung bei einer Zerspanung von Holz, insbesondere zur Zerspanung der seitlichen Segmente von Holzstämmen in Profilzerspanern und Zerhackern bei der Herstellung von Papierhackschnitzeln. An dem rotierenden Werkzeugkopf können sowohl umfangsseitige Messer, sogenannte Hackmesser, als auch stirnseitige Messer, sogenannte Planmesser oder Schlichtmesser, eingesetzt sein. Die Hackmesser dienen dabei primär zum Erzeugen der Nutzspäne, während die Planmesser primär der Erzielung einer geschlichteten, planen Oberfläche des verbleibenden Holzmaterials dienen.

Aus der DE 198 58 740 C1 ist es bekannt, ein Messer an einem Messerhalter zu befestigen, der eine Montagefläche mit im Querschnitt V-förmig geneigten Halterkontaktflächen aufweist, wobei das Messer mit korrespondierend im Querschnitt V-förmig geneigten Messerkontaktflächen gegen die V-förmig geneigten Halterkontaktflächen anliegt. Das Messer wird durch ein zugehöriges Befestigungsmittel, insbesondere durch eine Befestigungsschraube, mit einer im Bereich zwischen den V-förmig geneigten Kontaktflächen einwirkenden Haltekraft am Messerhalter direkt und damit klemmstückfrei gehalten. Die Messer können als Wendemesser ausgebildet sein und besitzen an gegenüberliegenden Schmalseitenkanten je eine Messerschneide. Die Messerkontaktflächen und die Halterkontaktflächen können an ihren den Messerschneiden zugewandten Endbereichen mit Krümmungen ausgebildet sein, die senkrecht zu einer angrenzenden Spanfläche an diese anschließen.

Aus der EP 1 547 710 A1 ist ein Werkzeug mit einer Schneidplatte bekannt, wobei das Werkzeug und die Schneidplatte zueinander korrespondierende wellenförmige Kontaktflächen aufweisen.

Aus der EP 0 985 502 A2 ist eine Messereinspannung bekannt, wobei ein Messer zwischen einer inneren und einer äußeren Spanneinrichtung aufgenommen wird, welche durch eine Schraube miteinander verspannt werden.

Aus der DE 25 03 592 ist eine Messeranordnung mit einem mit zwei Längs-Schneidkanten versehenen Schneideinsatz bekannt, wobei der Schneideinsatz in einem Halter so befestigbar ist, dass sich jeweils eine Schneidkante in Schneidstellung befindet, wobei die Schneidkanten im Querschnitt die spitzigen Winkel eines Parallelogramms bilden und wobei der Einsatz mit zwei Längsaushöhlungen versehen ist, welche den im Querschnitt des Einsatzes stumpfwinkligen Bereich einnehmen.

Aufgabe der vorliegenden Erfindung ist es, einen Messerwerkzeugkopf sowie dafür geeignete Messer und Messerhalter zu schaffen, wobei das Messer sehr genau in dem Messerhalter positionierbar ist. Es ist weiter Aufgabe der vorliegenden Erfindung, ein Messer mit einem verbesserten Spanablauf zu schaffen.

Diese Aufgaben werden durch die Gegenstände mit den Merkmalen der Ansprüche 1, 4 und 10 gelöst. Weitere Vorteile der Erfindung ergeben sich aus den Unteransprüchen.

Hierfür beinhalten bei einem Messerwerkzeugkopf, insbesondere einem Zerspannungsmesserwerkzeugkopf, mit einem Werkzeugkopf Grundkörper mit mindestens einem Messerhalter, der Halterkontaktflächen aufweist, und mit mindestens einem an dem Messerhalter mittels eines zugeordneten Befestigungsmittels lösbar befestigten Messer, das wenigstes an einer von zwei senkrecht zu einer Querschnittsebene verlaufenden Seiten eine Messerschneide und beidseits des Befestigungsmittels Messerkontaktflächen, die gegen die Halterkontaktflächen anliegen, aufweist, die Halterkontaktflächen und die Messerkontaktflächen zueinander komplementäre, im Querschnitt wellenförmige Kontaktflächenabschnitte, die jeweils mindestens einen Wendepunkt aufweisen, wobei die Halterkontaktflächen und die Messerkontaktflächen zwischen dem Befestigungsmittel und ihren wellenförmigen Kontaktflächenabschnitten korrespondierend im Querschnitt V-förmig geneigten Kontaktflächenabschnitte aufweise. Durch die wellenförmige Gestaltung der Kontaktflächenabschnitte der Halterkontaktfläche und der Messerkontaktfläche wird das Messer an dem Messerhalter genau positioniert. Die Positionierung ist dabei über mehrere Anlageflächen möglich. Die Radien der Wellenform können einheitlich oder variierend gewählt werden. Durch die Wellenform der Kontaktflächen wird zudem ein Eindringen von Schmutz in den Messersitz, d.h. den Kontaktbereich zwischen Messer und Messerhalter, verhindert. Die wellenförmigen Kontaktflächenabschnitte schließen vorzugsweise direkt an die V-förmigen Kontaktflächenabschnitte an. Durch die Anlageflächen der Wellenform können die Schenkel der V-förmigen Kontaktflächenabschnitte kürzer gestaltet werden, als dies bei herkömmlichen Messern und Messerhaltern üblich ist.

In einer Ausführungsform der Erfindung weisen die wellenförmigen Endbereiche jeweils mindestens einen Wellenberg und ein Wellental auf. Die Endbereiche sind damit S-förmig im Querschnitt. Dadurch ist eine sichere Positionierung mit jeweils zwei zueinander im Wesentlichen V-förmig ausgerichteten Anlageflächen möglich. Bei Ausbildung weiterer Wellenformen kann zwar eine Positionierung verbessert werden, es steigen jedoch auch die Anforderungen an eine Exaktheit der Fertigung.

Gemäß einer Weiterbildung des Werkzeugkopfs ist das Befestigungsmittel, insbesondere eine Befestigungsschraube, als ein klemmstückfreies Direktbefestigungsmittel ausgebildet, welches das Messer direkt mit dem Messerhalter verbindet. Durch die direkte Befestigung kann auf sogenannte Klemmstücke oder ähnliches verzichtet werden. Ein Wechseln des Messers ist dabei schneller durchführbar. Aufgrund der besonderen Form des Messersitzes wird verhindert, dass zu hohe Drehmomente auf das Befestigungsmittel, insbesondere auf eine Befestigungsschraube, wirken.

Die Aufgabe wird weiter gelöst durch ein Messer für einen Messerwerkzeugkopf, wobei das Messer mindestens an einer von zwei senkrecht zu einer Querschnittsebene verlaufenden Seiten eine Messerschneide aufweist, mit einer Durchgangsöffnung für ein Befestigungsmittel versehen ist, im Querschnitt beidseits der Durchgangsöffnung mit Messerkontaktflächen ausgebildet ist, mindestens eine Messerkontaktfläche einen im Querschnitt wellenförmigen Kontaktflächenabschnitt mit mindestens einem Wendepunkt aufweist und die Messerkontaktflächen zwischen der Durchgangsöffnung für das Befestigungsmittel und ihren wellenförmigen Kontaktflächenabschnitten im Querschnitt V-förmig geneigte Kontaktflächenabschnitte aufweisen. Ein derartiges Messer kann sehr genau auf einem geeigneten Messerhalter positioniert werden. In einer Ausführungsform ist die Durchgangsöffnung zumindest teilweise mit einem Gewinde oder ähnlichem ausgebildet. Vorzugsweise ist die Durchgangsöffnung jedoch gewindefrei. Durch die beidseitig geneigten Kontaktflächen ist eine gute Anlage an einen Messerhalter möglich. Dabei sind auch Ausführungsformen denkbar, bei denen das Messer nur an einer Messerkontaktfläche zusätzlich zu einem geneigten Kontaktflächenabschnitt mit einem wellenförmigen Kontaktflächenabschnitt ausgebildet ist.

Gemäß einer bevorzugten Ausführungsform ist anschließend an eine die Messerschneide bildende Spanfläche ein konkaver Spanablauf ausgeformt. Planverlaufende Spanabläufe können dazu führen, dass Späne an dem Messer und/oder an einem zugehörigen Messerhalter, insbesondere im Kontaktbereich zwischen Messer und Messerhalter, am sogenannten Messersitz, sehr stark gebrochen oder gestaucht werden. Dies kann zu einem ungewünschten Verschleiß des Messerhalters führen und wird durch die konkave Form des Spanablaufs vermieden. Durch die konkave Form des Spanablaufs kann daher der Verschleiß am Messerhalter deutlich reduziert und das Spanbrechen optimiert werden.

In einer weiteren Ausführungsform schließt der konkave Spanablauf an eine plane Spanfläche an. Die Neigung der Spanfläche kann dabei in geeigneter Weise gewählt werden. Aufgrund des konkaven Spanablaufs ist ein Nachschleifen der Spanfläche möglich, ohne die Höhe des Messers wesentlich zu mindern.

Gemäß einer weiteren Ausführungsform ist die Messerschneide durch die Spanfläche und eine Freifläche gebildet, wobei die Freifläche in Richtung der Messerschneide geneigt ist. Dadurch ist die Messerschneide mit einem geeigneten Winkel ausformbar.

In einer vorteilhaften Ausführungsform der Erfindung ist das Messer symmetrisch ausgebildet. Dadurch ist das Messer als Wendemesser einsetzbar. Vorzugsweise ist das Messer als Hackmesser ausgebildet. Das Messer ist dabei umfangsseitig an dem rotierenden Werkzeugkopf anbringbar.

Die Aufgabe wird weiter gelöst durch einen Messerhalter zum Halten mindestens eines Messers der vorbeschriebenen Art, wobei der Messerhalter mit einer Aufnahme für ein Befestigungsmittel ausgebildet ist, beidseits der Aufnahme Halterkontaktflächen aufweist, mindestens eine Halterkontaktfläche einen im Querschnitt wellenförmigen Kontaktflächenabschnitt mit mindestens einem Wendepunkt aufweist und die Halterkontaktflächen zwischen der Aufnahme für das Befestigungsmittel und ihren wellenförmigen Kontaktflächenabschnitten im Querschnitt V-förmig geneigte Halterkontaktflächenabschnitte aufweisen.

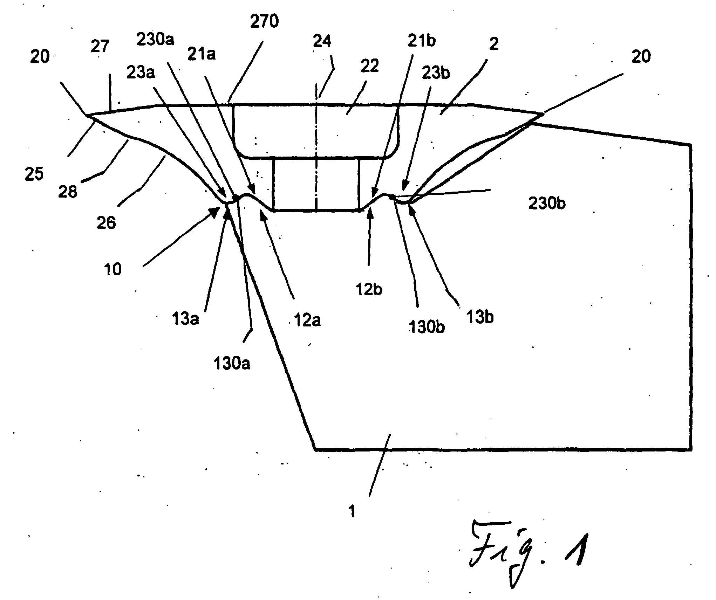

Die Erfindung wird nachfolgend anhand einer in der Figur dargestellten Ausführungsform beispielhaft beschrieben.

Die einzige Figur zeigt einen Messerhalter mit einem daran befestigten Messer im Querschnitt.

Die Figur zeigt einen Messerhalter 1 mit einem daran befestigten Messer 2. Der Messerhalter 1 ist beispielsweise an einem nicht dargestellten Werkzeugkopfgrundkörper befestigbar. Das dargestellte Messer 2 ist dabei umfangsseitig an dem Werkzeugkopf angeordnet, so dass es als Hackmesser dient. Das Messer 2 ist als Wendemesser ausgebildet, mit zwei einander gegenüberliegenden Messerschneiden 20.

Der Kontaktbereich zwischen dem Messer 2 und dem Messerhalter 1 wird als Messersitz 10 bezeichnet. Zur Bildung des Messersitzes 10 sind an dem Messerhalter 1 Halterkontaktflächen 12a, 12b, 13a, 13b ausgeformt. Das Messer 2 liegt mit Messerkontaktflächen 21 a, 21 b, 23a, 23b an den Halterkontaktflächen 12a, 12b, 13a, 13b an. Im Bereich zwischen den Halterkontaktflächen oder den Messerkontaktflächen ist eine Durchgangsöffnung 22 für ein nicht dargestelltes Befestigungsmittel, insbesondere eine Befestigungsschraube, mit einer Achse 24 vorgesehen. Der Messerhalter 1 ist mit einer nicht sichtbaren Bohrung zur Aufnahme des Befestigungsmittels ausgebildet.

Die Halterkontaktflächen umfassen im Querschnitt V-förmig geneigte Kontaktflächenabschnitte 12a, 12b. Das Messer 1 weist dazu korrespondierende, im Querschnitt V-förmig geneigte Kontaktflächenabschnitte 21 a, 21 b auf.

Die von der Durchgangsöffnung 22 abgewandten Endbereiche der Halterkontaktflächen und der Messerkontaktflächen sind als zueinander komplementäre, im Querschnitt wellenförmige Kontaktflächenabschnitte 13a, 13b, 23a, 23b ausgeformt, wobei die wellenförmigen Kontaktflächenabschnitte jeweils mindestens einen Wendepunkt 130a, 130b, 230a, 230b aufweisen. Die Wendepunkte 130a, 230a und 130b, 230b fallen im dargestellten Kontakt des Messers 2 mit dem Messerhalter 1 zusammen. In der dargestellten Ausführungsform sind die wellenförmigen Kontaktflächenabschnitte 13a, 13b, 23a, 23b jeweils mit mindestens einem Wellental und einem Wellenberg ausgebildet. Die Kontaktflächenabschnitte 13a, 13b, 23a, 23b weisen somit einen S-förmigen Querschnitt auf.

Der Messersitz 10 wird in der dargestellten Ausführungsform durch die im Querschnitt V-förmigen Kontaktflächenabschnitte 12a, 12b, 21a, 21b sowie die im Querschnitt wellenförmigen Kontaktflächenabschnitte 13a, 13b, 23a, 23b gebildet. Durch den dargestellten Messersitz 10 ist das Messer 2 sehr genau positionierbar. Die Auflageflächen können dabei jeweils vergleichsweise klein ausgebildet werden. Ein Verdrehen des Messers 2 um die Achse 24 aufgrund einer Belastung beim Gebrauch wird durch den Messersitz 10 verhindert. Das Messer 2 kann so ohne zusätzliche Klemmstücke an dem Messerhalter 1 befestigt werden. Durch die Wellenform kann zudem ein Eindringen von Schmutz in den Messersitz 10 gut verhindert werden. In anderen Ausführungsformen kann der Messersitz beispielsweise nur durch die im Querschnitt wellenförmigen Kontaktflächenabschnitte 13a, 13b, 23a, 23b gebildet sein.

Jede Messerschneide 20 wird durch eine plane Spanfläche 25 und eine Freifläche 27 gebildet. Die Freiflächen 27 laufen bei der dargestellten Ausführungsform in Richtung der Messerschneide 20 zu, d.h. mit einem gewissen Neigungswinkel zur freien Messeroberfläche 270. Dadurch kann die Messerschneide 20 mit einem beliebigen Winkel gestaltet werden. Es sind jedoch auch Ausführungsformen mit gerader Freifläche 27 möglich.

An die planen Spanflächen 25 schließen konkave Spanabläufe 26 an. Der Spanablauf 26 endet an der Oberkante des Messerhalters 1, wobei durch eine geeignete Krümmung des Spanablaufs 26 am Messersitz 10 ein weitgehend glatter, stetiger Übergang zwischen dem Messer 2 und dem Messerhalter 1 erreicht werden kann. Das Messer 2 kann dabei wie dargestellt leicht über den Messerhalter 1 am Messersitz 10 hervorstehen. Durch die konkave Form des Spanablaufs 26 und den im Wesentlichen knickfreien Übergang zwischen Messer 2 und Messerhalter 1 werden abgehobene Späne nicht zu stark an der Spanfläche, an dem Messersitz 10 und/oder an dem Messerhalter 1 gebrochen oder gestaucht. Durch die konkave Form, insbesondere durch einen leichten Absatz 28 zwischen der Spanfläche 25 und dem Spanablauf 26, ist ein vielmaliges Nachschleifen des Messers 2 möglich, ohne die Höhe des Messers 2 wesentlich zu verändern und ohne die konkave Spanablaufform zu verlieren.

## Patentansprüche

1. Zerspanungsmesserwerkzeugkopf mit
- einem Werkzeugkopf-Grundkörper mit mindestens einem Messerhalter (1), der Halterkontaktflächen aufweist,
- mindestens einem an dem Messerhalter (1) mittels eines zugeordneten Befestigungsmittels lösbar befestigten Messer (2), das wenigstens an einer von zwei senkrecht zu einer Querschnittsebene verlaufenden Seiten eine Messerschneide (20) aufweist und beidseits des Befestigungsmittels Messerkontaktflächen, die gegen die Halterkontaktflächen anliegen, aufweist, und wobei
- die Halterkontaktflächen und die Messerkontaktflächen korrespondierend im Querschnitt V-förmig geneigte Kontaktflächenabschnitte (12a, 12b, 21 a, 21 b) aufweisen,
**dadurch gekennzeichnet, dass**
- die Halterkontaktflächen und die Messerkontaktflächen zueinander komplementäre, im Querschnitt wellenförmige Kontaktflächenabschnitte (13a, 13b, 23a, 23b) beinhalten, die jeweils mindestens einen Wendepunkt (130a, 130b, 230a, 230b) aufweisen, und die im Querschnitt V-förmig geneigten Kontaktflächenabschnitte (12a, 12b, 21a, 21b) der Halterkontaktflächen und der Messerkontaktflächen zwischen dem Befestigungsmittel und ihren wellenförmigen Kontaktflächenabschnitten angeordnet sind.

2. Messerwerkzeugkopf nach Anspruch 1, **dadurch gekennzeichnet, dass** die wellenförmigen Kontaktflächenabschnitte (13a, 13b, 23a, 23b) jeweils mindestens ein Wellental und einen Wellenberg aufweisen.

3. Messerwerkzeugkopf nach Anspruch 1 oder 2, **dadurch gekennzeichnet, dass** das Befestigungsmittel als klemmstückfreies Direktbefestigungsmittel ausgebildet ist, welches das Messer (2) direkt mit dem Messerhalter (1) verbindet.

4. Messer für einen Messerwerkzeugkopf, wobei das Messer (2) mindestens an einer von zwei senkrecht zu einer Querschnittsebene verlaufenden Seiten eine Messerschneide (20) aufweist, mit einer Durchgangsöffnung (22) für ein Befestigungsmittel versehen ist, im Querschnitt beidseits der Durchgangsöffnung (22) mit Messerkontaktflächen ausgebildet ist, und die Messerkontaktflächen im Querschnitt V-förmig geneigte Kontaktflächenabschnitte (21 a, 21 b) aufweist,
**dadurch gekennzeichnet, dass**
mindestens eine Messerkontaktfläche einen im Querschnitt wellenförmigen Kontaktflächenabschnitt (23a, 23b) mit mindestens einem Wendepunkt (230a, 230b) aufweist und
die im Querschnitt V-förmig geneigten Kontaktflächenabschnitte (21a, 21b) der Messerkontaktflächen zwischen der Durchgangsöffnung für das Befestigungsmittel (22) und ihren wellenförmigen Kontaktflächenabschnitten (23a, 23b) angeordnet sind.

5. Messer nach Anspruch 4, **dadurch gekennzeichnet, dass** der im Querschnitt wellenförmige Kontaktflächenabschnitt (23a, 23b) mindestens ein Wellental und einen Wellenberg aufweist.

6. Messer nach Anspruch 4 oder 5, **dadurch gekennzeichnet, dass** anschließend an eine die Messerschneide (20) bildende Spanfläche (25) ein konkaver Spanablauf (26) ausgeformt ist.

7. Messer nach Anspruch 4, 5 oder 6, **dadurch gekennzeichnet, dass** der konkave Spanablauf (26) an eine plane Spanfläche (25) anschließt.

8. Messer nach einem der Ansprüche 4 bis 7, **dadurch gekennzeichnet, dass** die Messerschneide (20) durch eine Spanfläche (25) und eine Freifläche (27) gebildet ist, wobei die Freifläche (27) in Richtung der Messerschneide (20) geneigt ist.

9. Messer nach einem der Ansprüche 4 bis 8, **dadurch gekennzeichnet, dass** das Messer (2) symmetrisch ausgebildet ist.

10. Messerhalter zum Halten mindestens eines Messers (2) nach einem der Ansprüche 4 bis 9, wobei der Messerhalter (1) mit einer Aufnahme für ein Befestigungsmittel ausgebildet ist, beidseits der Aufnahme Halterkontaktflächen aufweist und die Halterkontaktflächen im Querschnitt V-förmig geneigte Halterköntaktflächenabschnitte (12a, 12b) aufweisen, **dadurch gekennzeichnet, dass**
mindestens eine Halterkontaktfläche einen im Querschnitt wellenförmigen Kontaktflächenabschnitt (13a, 13b) mit mindestens einem Wendepunkt (130a, 130b) aufweist und
die im Querschnitt V-förmig geneigte Halterkontaktflächenabschnitte (12a, 12b) der Halterkontaktflächen zwischen der Aufnahme für das Befestigungsmittel und ihren wellenförmigen Kontaktflächenabschnitten (13a, 13b) angeordnet sind.

## Claims

1. A chip removal cutting tool head with
- a tool head body with at least one cutting tool holder (1) having holding contact surfaces,
- at least one cutting tool (2) detachably fixed on the cutting tool holder (1) by means of a corresponding fixing means, said cutting tool (2) having a cutting tool edge (20) at least on one side running perpendicularly to a cross-section plane and on both sides of the fixing means having cutting tool contact surfaces that abut on the holding contact surfaces, and wherein
- said holding contact surfaces and said cutting tool contact surfaces have corresponding V-shaped inclined contact surface sections (12a, 12b, 21 a, 21 b) in cross-section,
**characterized in that,**
- the holding contact surfaces and cutting tool contact surfaces are complementary to one another, comprising wave-shaped contact surface sections (13a, 13b, 23a, 23b) in cross-section, which respectively feature at least a turning point (130a, 130b, 230a, 230b), and said V-shaped inclined contact surface sections (12a, 12b, 21 a, 21b) in cross-section of said holding contact surfaces and said cutting tool contact surfaces are disposed between the fixing means and said wave-shaped contact surface sections.

2. The cutting tool head according to Claim 1, **characterized in that** the wave-shaped contact surface sections (13a, 13b, 23a, 23b) have at least a wave trough and a wave crest each.

3. The cutting tool head according to Claim 1 or 2, **characterized in that** the fixing means is formed as clamp-less direct fastening means, which connects the cutting tool (2) directly with the cutting tool holder (1).

4. The cutting tool for a cutting tool head, wherein the cutting tool (2) has at least a cutting tool edge (20) on one of two sides running perpendicular to a cross-section plane, is provided with a passage opening (22) for a fixing means, in the cross-section is formed with cutting tool contact surfaces on both sides of the passage opening (22), and the cutting tool contact surfaces in the cross-section have V-shaped inclined contact surface sections (21 a, 21 b),
**characterized in that**
at least one cutting tool contact surface has a contact surfaces section (23a, 23b) with a wave-shaped cross-section having at least one turning point (230a, 230b) and
said in cross-section V-shaped inclined contact surface sections (21 a, 21 b) of the cutting tool contact surfaces are disposed between the passage opening for the fixing means (22) and said wave-shaped contact surfaces sections (23a, 23b).

5. The cutting tool according to Claim 4, **characterized in that** the contact surfaces section (23a, 23b) with wave-shaped cross-section has at least one wave trough and one wave crest.

6. The cutting tool according to Claim 4 or 5, **characterized in that** a concave chip flow (26) is formed adjacent to the chip removal surface (25) forming the cutting tool edge (20).

7. The cutting tool according to Claim 4, 5 or 6, **characterized in that** the concave chip flow (26) adjoins a plane chip-removal surface (25).

8. The cutting tool according to one of the Claims 4 to 7, **characterized in that** the cutting tool edge (20) is formed by a chip removal surface (25) and a free surface (27), wherein the free surface (27) is inclined in the direction of the cutting tool edge (20).

9. The cutting tool according to one of the Claims 4 to 8, **characterized in that** the cutting tool (2) is symmetrical in shape.

10. A cutting tool holder for holding at least one cutting tool (2) according to one of Claims 4 to 9, wherein the cutting tool holder (1) is formed with a receptacle for a fixing means, has contact surfaces on both sides of the receptacle holder and the holding contact surfaces has holding contact surface sections (12a, 12b) V-shaped inclined in cross-section, **characterized in that**
at least a holding contact surface has a contact surface section (13a, 13b) with a wave-shape in cross-section having at least one turning point (130a, 130b) and
the in cross-section V-shaped inclined holding contact surface sections (12a, 12b) of the holding contact surfaces are disposed between the receptacle for the fixing means and the wave-shaped contact surface sections (13a, 13b).

## Revendications

1. Tête d'outil à lame d'usinage par enlèvement de copeaux comprenant
- un corps de base de la tête d'outil avec au moins un support (1) de lame, lequel support présente des surfaces de contact,
- au moins une lame (2) fixée de façon détachable contre le support (1) de lame à l'aide d'un moyen de fixation attribué, lame qui présente un tranchant (20) au moins sur l'un des deux côtés perpendiculaires à un plan de section, et qui des deux côtés du moyen de fixation présente des surfaces de contact de lame qui appliquent contre les surfaces de contact du support, et
- les surfaces de contact du support et les surfaces de contact de la lame présentant en correspondance des segments inclinés en V de surfaces de contact (12a, 12b, 21 a, 21 b) vue en coupe tranversale,
**caractérisée en ce que**
- les surfaces de contact du support et les surfaces de contact de la lame présentent des segments (13a, 13b, 23a, 23b), complémentaires et ayant des segments ondulés de surface de contact (130a, 130b, 230a, 230b) qui présentent chacun au moins un point d'inflexion et **en ce que** les segments inclinés en V (12a, 12b, 21 a, 21 b), des surfaces de contact du support et des surfaces de contact de la lame sont agencés entre le moyen de fixation et leurs segments ondulés de surface de contact.

2. Tête d'outil à lame selon la revendication 1, **caractérisée en ce que** les segments ondulés (13a, 13b, 23a, 23b) des surfaces de contact présentent chacun au moins un creux et une crête d'ondulation.

3. Tête d'outil à lame selon la revendication 1 ou 2, **caractérisée en ce que** le moyen de fixation est configuré en moyen de fixation direct sans pièce de bridage, moyen qui relie directement la lame (2) avec le support de lame (1).

4. Lame pour tête d'outil à lame, la lame (2) présentant un tranchant (20) sur au moins l'un des deux côtés perpendiculaires à un plan de section, étant dotée d'un orifice (22) qui permet le passage d'un moyen de fixation, la section des deux côtés de l'orifice de passage (22) étant configurée avec des surfaces de contact de lame, et les surfaces de contact de lame présentant des segments (21 a, 21 b), inclinés en V, vue en coupe transversale de surface de contact, **caractérisée en ce qu'**au moins
une surface de contact de lame présente un segment ondulé (23a, 23b), vue en coupe transversale de surface de contact avec au moins un point d'inflexion (230a, 230b) et **en ce que**
les segments inclinés en V (21 a, 21 b), vue en coupe transversale, des surfaces de contact de la lame sont agencés entre l'orifice de passage du moyen de fixation (22) et leurs segments ondulés (23a, 23b) de surface de contact.

5. Lame selon la revendication 4, **caractérisée en ce que** le segment ondulé (23a, 23b) vue en coupe transversale de surface de contact comporte au moins un creux et une crête d'ondulation.

6. Lame selon les revendications 4 ou 5, **caractérisée en ce que** la surface (25) relevant le copeau et formant le tranchant (20) de la lame se poursuit selon une géométrie concave (26) permettant l'évacuation du copeau.

7. Lame selon les revendications 4, 5 ou 6, **caractérisée en ce que** la géométrie concave (26) d'évacuation du copeau jouxte une surface plane (25) relevant le copeau.

8. Lame selon l'une des revendications 4 à 7, **caractérisée en ce que** le tranchant (20) de la lame est formé par une surface (25) relevant le copeau et une surface libre (27), cette surface libre (27) étant inclinée en direction du tranchant (20) de la lame.

9. Lame selon l'une des revendications 4 à 8, **caractérisée en ce que** la lame (2) est de configuration symétrique.

10. Support pour retenir au moins une lame (2) selon l'une des revendications 4 à 9, sachant que le support (1) de lame présente un réceptacle recevant un moyen de fixation, présente des surfaces de contact de support sur les deux côtés du réceptacle et que les surfaces de contact du support présentent des segments (12a, 12b), inclinés en V vue en coupe transversale de surface de contact, **caractérisé en ce qu'**au moins une surface de contact de support présente un segment ondulé (13a, 13b) vue en coupe transversale de surface de contact avec au moins un point d'inflexion (130a, 130b) et **en ce que**
les segments inclinés en V (12a, 12b) vue en coupe transversale, des surfaces de contact de support sont agencés entre le réceptacle du moyen de fixation et leurs segments ondulés (13a, 13b), de surface de contact.
